# FASCICULE DE BREVET EUROPEEN

(11) **EP 1 106 430 B1**
(45) Date de publication et mention de la délivrance du brevet: **21.07.2004**
(21) Numéro de dépôt: 00403314.8
(22) Date de dépôt: 27.11.2000
(51) Int. Cl.: B60N 3/14

(54) **Allume-cigares lumineux**
Beleuchteter Zigarrenanzünder
Illuminated cigar lighter

(30) Priorité: 30.11.1999 FR 9915069
(43) Date de publication de la demande: 13.06.2001
(73) Titulaire: VALEO VISION, 93012 Bobigny Cédex (FR)
(72) Inventeur: Rostan, Philippe, 93012 Bobigny Cedex (FR)
(74) Mandataire: Hervouet, Sylvie

(56) Documents cités:
- EP-A- 0 511 089
- EP-A- 0 678 419
- DE-C- 3 932 601
- FR-A- 2 235 022
- FR-A- 2 630 057
- FR-A- 2 758 111
- GB-A- 2 099 122

## Description

L'invention concerne le domaine des allume-cigares, notamment ceux pour véhicules automobiles. Plus précisément, il s'agit d'allume-cigares lumineux.

Un allume-cigares de ce type est décrit, par exemple, dans le document FR-A-2 758 111. Il comporte un corps d'alimentation formant un réceptacle pour un bouchon chauffant amovible. Le réceptacle présente un orifice pour y introduire le bouchon. Cet orifice est entouré par une bague éclairante.

On connaît également des allume-cigares comportant un corps d'alimentation et un bouchon chauffant amovible lumineux. Ce bouchon présente une surface sur laquelle l'utilisateur appuie pour enfoncer le bouchon en position de chauffe, dans le corps d'alimentation, et sur laquelle un motif, par exemple représentant une cigarette allumée, est rendu lumineux grâce à l'existence d'une diode, placée dans le bouchon et alimentée par le corps d'alimentation, lorsque le bouchon est en place dans ce dernier.

D'autres types d'allume-cigares dont le bouchon est lumineux mais dont la réalisation est plus simple et moins coûteuse que celle des allume-cigares précédents ont été proposés. On connaît par exemple du document FR 2 -A- 630 057 un allume-cigares lumineux, notamment pour véhicules automobiles, comportant un corps d'alimentation formant un réceptacle pour un bouchon chauffant, lumineux et amovible, ledit bouchon comportant une partie fixe et une partie mobile susceptible d'être déplacée axialement par rapport à et à l'intérieur de ladite partie fixe, la partie mobile comprenant un bouton poussoir, dans lequel le bouchon comport en outre un guide lumineux pour propager la lumière qui lui est transmise lorsque le bouchon est en place dans le corps d'alimentation depuis une source de lumière externe au bouchon.

La source lumineuse interne au bouchon étant supprimée, la réalisation de l'allume-cigares selon l'invention est simplifiée, et par là même, son coût de fabrication est diminué.

En revanche, un tel allume-cigare n'offre pas le même éclairage du bouchon selon que ce dernier soit en position de repos ou en position de chauffe.

La présente invention a pour but de pallier l'inconvénient précédent.

Ce but est atteint selon l'invention grâce à un allume-cigares lumineux notamment pour véhicules automobiles, comportant un corps d'alimentation formant un réceptacle pour un bouchon chauffant, lumineux et amovible, ledit bouchon comportant une partie fixe et une partie mobile susceptible d'être déplacée axialement par rapport à ladite partie fixe et à l'intérieur de ladite partie fixe, la partie mobile comprenant un bouton poussoir, le bouchon comportant en outre un guide lumineux pour propager la lumière qui lui est transmise lorsque le bouchon est en place dans le corps d'alimentation depuis une source de lumière externe au bouchon, caractérisé par le fait que ledit guide lumineux est un élément de ladite partie fixe entourant le bouton poussoir.

Avantageusement, le guide lumineux colore la lumière.

Avantageusement encore, le guide lumineux affleure, au moins partiellement, sur une surface de préhension du bouchon. Cette surface de préhension correspond à celle sur laquelle l'utilisateur pose ses doigts afin de serrer le bouchon pour le tirer et l'extraire du corps d'alimentation. Ainsi, lorsque le guide lumineux affleure sur cette surface, il indique à l'utilisateur, l'endroit où il peut poser ses doigts.

Avantageusement, le bouchon comprend un tube en matière plastique transmettant la lumière. Ce tube forme préférentiellement une bague externe, autour d'un bouton poussoir, la surface externe de ce tube correspondant à au moins une partie de la surface de préhension.

Avantageusement aussi, le corps d'alimentation est monté sur une planche de bord et comporte une bague éclairante visible sur la planche de bord, entourant l'orifice d'introduction du bouchon dans le corps d'alimentation, pour aider au repérage de l'allume-cigares et transmettre la lumière au bouchon, lorsque ce dernier est dans le corps d'alimentation. Ainsi, la localisation de l'allume-cigares, dans le véhicule, se fait par la bague éclairante lorsque le bouchon n'est pas dans son réceptacle et par le bouchon lorsque celui-ci y est.

Avantageusement alors, la bague éclairante et le guide lumineux comportent chacun au moins une zone éclairante teintée d'une couleur différente, pour que l'allume-cigares émette des lumières colorées différentes, lorsque le bouchon est en place dans le réceptacle et lorsqu'il n'y est pas.

Avantageusement, la source de lumière est constituée par l'un des éléments de la liste comprenant les conduits lumineux, les diodes et les ampoules.

D'autres aspects, buts et avantages de l'invention apparaîtront à la lecture de la description détaillée qui suit. L'invention sera aussi mieux comprise à l'aide des références aux dessins, sur lesquels :
- la figure 1 est une vue en perspective éclatée d'un allume-cigares conforme à la présente invention ;
- la figure 2 est une vue en perspective de côté du bouchon de l'allume-cigares représenté sur la figure 1, monté sur une planche de bord, celle-ci étant vue en coupe ;
- les figures 3a et 3b sont des représentations schématiques en coupe d'un allume-cigares du type de celui représenté sur les figures 1 et 2 ; sur la figure 3a l'allume-cigares est en position de repos ; sur la figure 3b l'allume-cigares est en position de chauffe ;
- la figure 4 est une vue en perspective de dessus de l'allume-cigares représenté sur les figures 1 à 3 ; et
- la figure 5 est une vue en perspective de dessus d'une variante de l'allume-cigares représenté sur les figures 1 à 4.

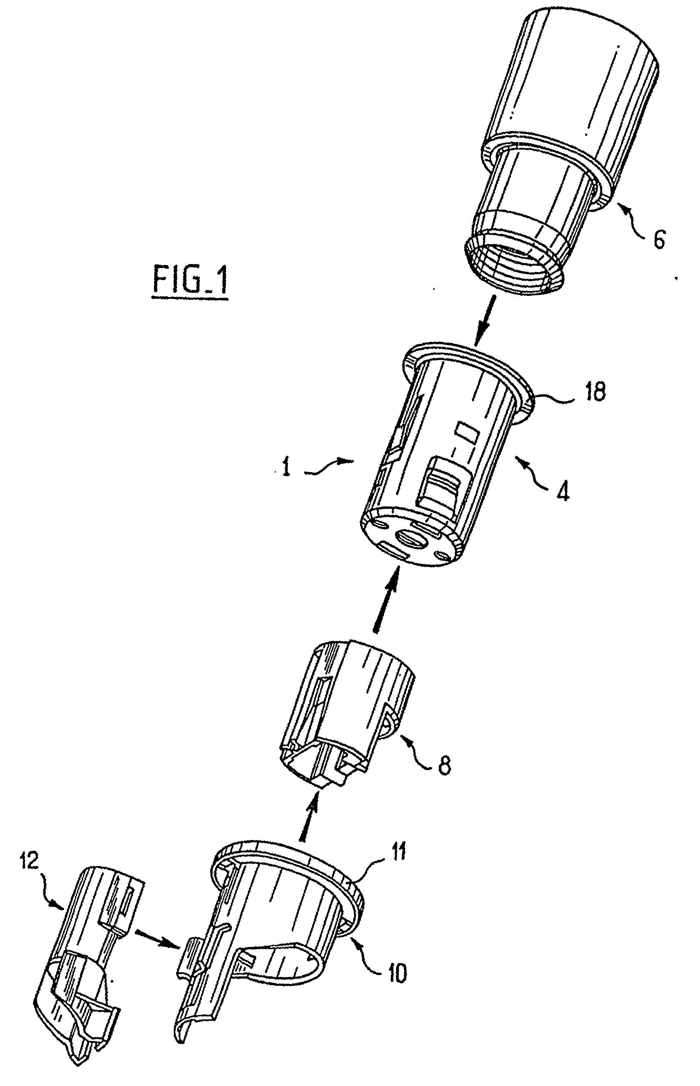

Un mode de réalisation, particulier mais non limitatif de l'allume-cigares 1 conforme à la présente invention va être décrit de manière détaillée ci-dessous en relation avec les figures 1 à 4.

Il s'agit d'un allume-cigares 1, à encastrer dans une planche de bord 2 d'un véhicule automobile. Il comprend un corps d'alimentation 4, un bouchon chauffant 6, un module de connexion 8, une bague éclairante 10 et un module d'éclairage 12 (figure 1).

Le corps d'alimentation 4 comporte une douille servant de réceptacle au bouchon 6 et munie intérieurement d'une prise de courant pour alimenter électriquement une résistance chauffante enroulée en spirale dans le bouchon 6.

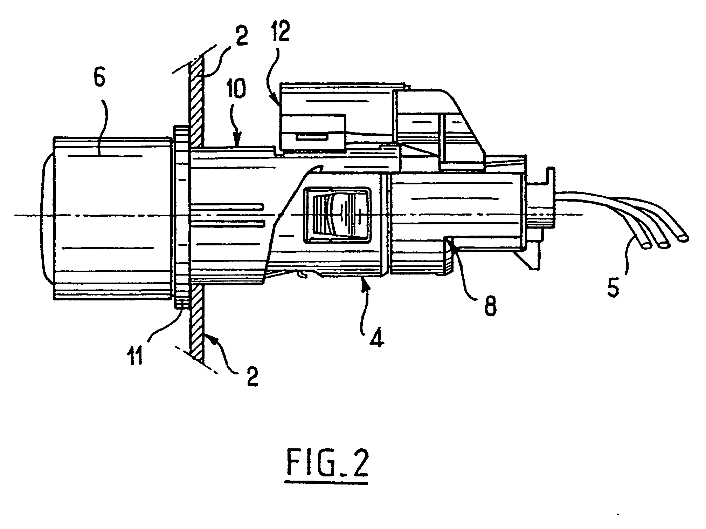

Le module de connexion 8 prolonge axialement le corps d'alimentation 4 et est porté sur ce dernier. Le module de connexion 8 alimente électriquement le corps d'alimentation 4 (figure 2), grâce à un faisceau électrique 5 faisant la liaison électrique entre le circuit général du véhicule et le module de connexion 8.

La bague éclairante 10 entoure le corps d'alimentation 4, permet la fixation de ce dernier sur la planche de bord 2 et produit, grâce à une collerette 11, un anneau lumineux sur celle-ci pour le repérage de l'allume-cigares 1, la nuit (figure 2).

Le module d'éclairage 12 est monté de manière protubérante sur la bague éclairante 10.

On trouvera dans ledit document FR-A-2 758 111, une description d'un mode de réalisation des corps d'alimentation 4, module de connexion 8, bague éclairante 10 et module d'éclairage tels que ceux mentionnés ci-dessus.

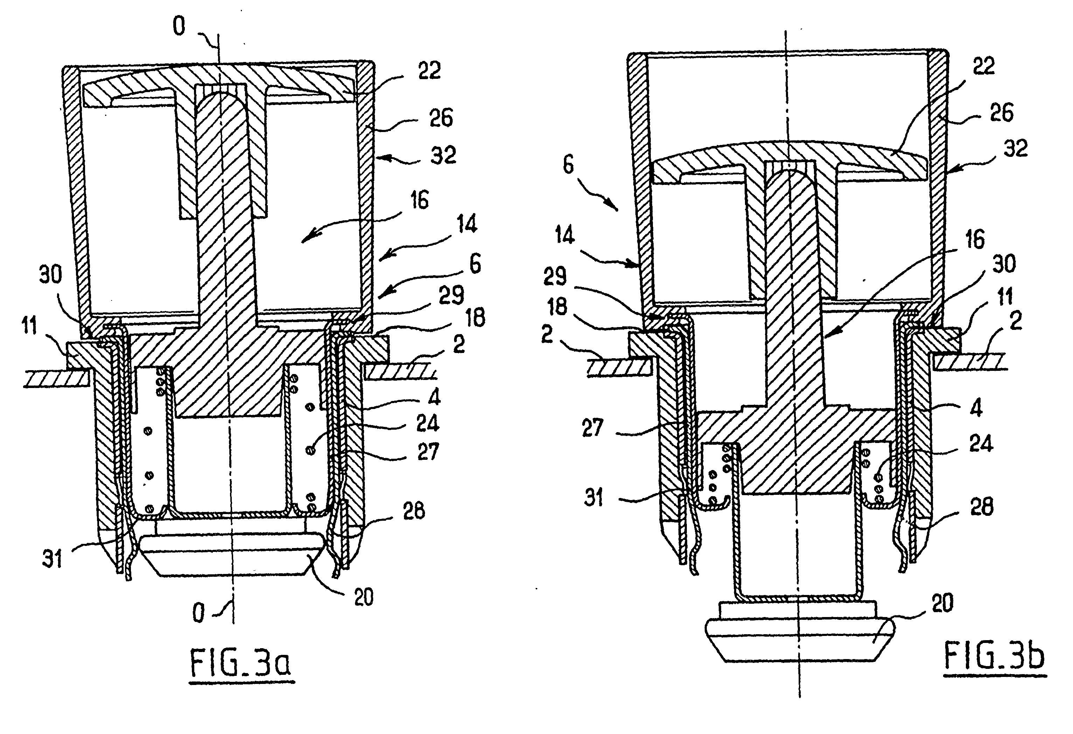

Comme représenté sur les figures 3a et 3b, le bouchon 6 comporte une partie fixe 14 et une partie mobile 16. La partie mobile 16 comprend une coupelle 20 comportant la résistance chauffante, un bouton poussoir 22 et des éléments électriquement et thermiquement isolants, intercalés entre la coupelle 20 et le bouton poussoir 22.

On trouvera également, dans le document FR-A-2 758 111 une description détaillée d'un mode de réalisation d'une partie mobile 16.

La partie fixe 14 vient, lorsque le bouchon 6 est en place dans le corps d'alimentation 4, en appui sur un rebord 18, partie du corps d'alimentation 4 et entourant l'orifice d'entrée du corps d'alimentation 4. Ce rebord 18 est en métal.

La collerette 11 s'étend radialement, perpendiculairement à l'axe longitudinal de la bague éclairante 10, autour du bord de cette dernière. La collerette 11 est destinée à coopérer avec la planche de bord 2 pour fixer l'allume-cigares 1 sur celle-ci. Le rebord 18 ne recouvre que partiellement la face de la collerette 11 qui, lorsque l'allume-cigares 1 est monté sur la planche de bord 2, est dirigée vers un guide lumineux 26 de manière à laisser passer la lumière de la bague éclairante 10 vers le guide lumineux 26. Le rebord 18 est constitué d'un méplat circulaire s'étendant radialement autour de cet orifice, perpendiculairement à l'axe longitudinal du corps d'alimentation 4.

Lorsque l'on appuie sur le bouton poussoir 22, la partie fixe 14 étant en butée sur la collerette 11, la partie mobile 16 se déplace axialement par rapport à la partie fixe 14, jusqu'à ce que la résistance chauffante vienne en contact électrique avec la prise de courant. Au cours de cette opération, un ressort de rappel hélicoïdal 24, intercalé entre la partie fixe 14 et la partie mobile 16, est compressé (figure 3b). La partie mobile 16 est maintenue en position enfoncée grâce à un bilame (non représenté) enserrant la coupelle 20. Lorsque la résistance chauffante est suffisamment chaude, le bilame se dilate et s'écarte de la coupelle 20. Le ressort 24 permet à la coupelle 20 de s'échapper du bilame. La partie mobile 16 revient alors dans une position où l'utilisateur n'a plus qu'à extraire le bouchon 6 pour allumer sa cigarette ou son cigare (figure 3a).

La partie fixe 14, comporte un guide lumineux 26, un guide métallique 27 et un pare-cendre 28.

Le guide lumineux 26 a principalement une forme de cylindre. Ce cylindre est de révolution autour d'un axe 0-0 correspondant à l'axe de translation de la partie mobile 16 par rapport à la partie fixe 14. Le diamètre interne du cylindre constitutif du guide lumineux 26 est adapté pour guider le bouton poussoir 22 en coulissement. Le diamètre externe du guide lumineux 20 croît légèrement en direction de son bord le plus éloigné de la planche de bord 2, lorsque le bouchon 6 est en place dans le corps d'alimentation 4.

On pourra noter que dans l'exemple représenté, la longueur est de 26 mm.

Le guide métallique 27 a aussi principalement une forme de cylindre de révolution autour de l'axe 0-0.

Le pare-cendre 28 forme également une bague cylindrique de révolution autour de l'axe de translation 0-0.

Le guide lumineux 26 comporte, sur sa face interne, des moyens de liaison 29 pour fixer le guide métallique 27 et le pare-cendre 28 sur le guide lumineux 26. Ces moyens de liaison 29 sont disposés de manière à ne pas gêner la propagation, dans le guide lumineux 24, d'une lumière pénétrant par la face de bord du cylindre constitutif du guide lumineux 26, orientée vers la planche de bord. Ce bord est appelé ci-dessous face de transmission 30.

La face externe du cylindre constitutif du guide lumineux, constitue une surface de préhension 32, par laquelle l'utilisateur peut saisir le bouchon 6 pour l'extraire du corps d'alimentation 4.

Des moyens de butée 31 sont prévus sur la face interne du guide métallique 27 pour arrêter le bouton poussoir 22 en fin de course, lorsqu'il est pressé par l'utilisateur.

Le guide lumineux 26 est constitué, comme la bague éclairante 10, d'une matière plastique transparente ou translucide, électriquement isolante, moulable et colorée. Les couleurs de la matière plastique constitutive du guide lumineux 26 et de la collerette 11 sont différentes. La lumière émise est alors différemment colorée selon que le bouchon 6 est en place ou non dans le corps d'alimentation.

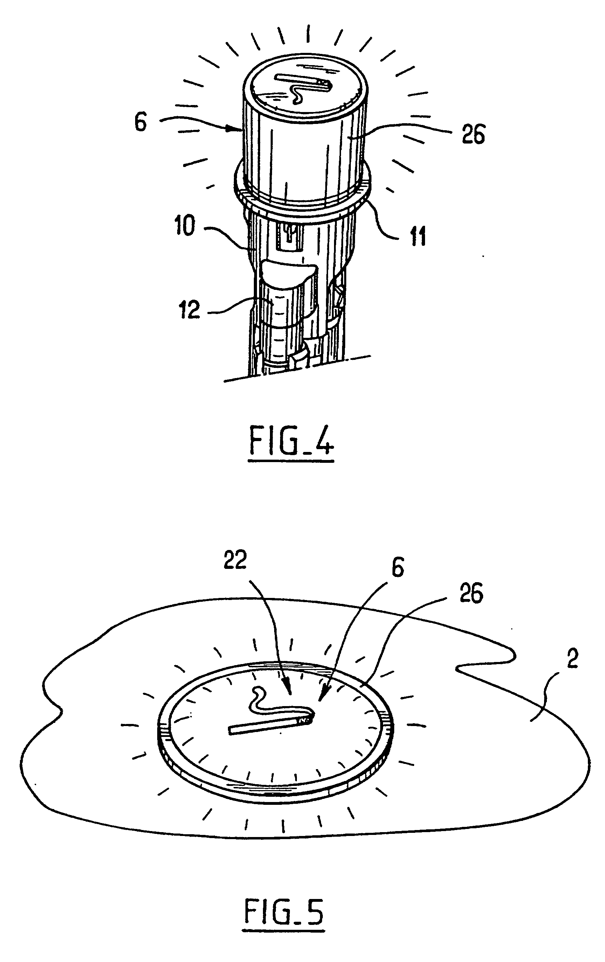

Lorsque le bouchon 6 est en place sur le corps d'alimentation 4, la face de transmission 30 et la face de la collerette 11, qui est principalement perpendiculaire à l'axe de translation 0-0 et dirigée vers l'utilisateur, sont très proches l'une de l'autre. Elles sont espacées de moins de un millimètre, l'une de l'autre. Ainsi, la lumière générée par le module d'éclairage 12, propagée dans la bague éclairante 10, est transmise, par la face de transmission 30, à l'ensemble du guide lumineux 26 (figure 4).

Le guide lumineux 26 éclaire alors principalement par la surface externe du cylindre dont il est constitué.

De nombreuses variantes peuvent être envisagées au mode de réalisation décrit ci-dessus.

Ainsi par exemple, le cylindre constitutif du guide lumineux 26 a une longueur avantageusement comprise entre 2,5 mm à 26 mm. Un guide lumineux 26 de quelques mm de longueur forme seulement un anneau lumineux, qui peut éventuellement affleurer sur une partie de la surface de préhension 32.

De nombreuses autres formes du guide lumineux 26 sont envisageables.

Selon certaines variantes de l'invention, il est prévu un autre guide lumineux apte à transmettre la lumière du guide lumineux 26, de la partie fixe 14 au bouton poussoir 22, afin par exemple de rendre éclairant, sur ce dernier, un motif, tel que celui représentant une cigarette allumée.

Selon encore d'autres variantes de l'invention, la lumière est transmise non pas par la collerette 11 mais par une source lumineuse telle qu'une ampoule, une diode, un conduit lumineux, etc., située sur la planche de bord 2, le corps d'alimentation 4, etc. et apte à transmettre la lumière au guide lumineux 26 lorsque le bouchon 6 est dans le corps d'alimentation. La lumière peut également être transmise au guide lumineux 26 par les flancs de ce dernier, lorsque l'on a un module d'éclairage 12 auxiliaire, extérieur à l'allume-cigares 1.

Selon encore d'autres variantes, la matière plastique du guide lumineux 26 n'est pas colorée.

Selon la variante illustrée par la figure 5, le guide lumineux 26 affleure à la surface de la planche de bord 2, alors que la source de lumière est située sous cette dernière. Le guide lumineux 26 forme un anneau lumineux autour du bouton poussoir 22, qui lui même suit le galbe de la planche de bord 2. Selon ce mode de réalisation, le guide lumineux 26 donne un effet lumineux semblable aux collerettes lumineuses des allume-cigares tels que ceux décrits dans le document FR-A-2 758 111. Mais, ici le guide lumineux est solidaire du bouchon 6 et non pas du corps d'allumage 4.

## Revendications

1. Allume-cigares lumineux notamment pour véhicules automobiles, comportant un corps d'alimentation (4) formant un réceptacle pour un bouchon (6) chauffant, lumineux et amovible, ledit bouchon (6) comportant une partie fixe (14) et une partie mobile (16) susceptible d'être déplacée axialement par rapport à ladite partie fixe et à l'intérieur de ladite partie fixe, la partie mobile comprenant un bouton poussoir (22), le bouchon (6) comportant en outre un guide lumineux (26) pour propager la lumière qui lui est transmise lorsque le bouchon est en place dans le corps d'alimentation (4) depuis une source de lumière (12) externe au bouchon, **caractérisé par le fait que** ledit guide lumineux est un élément de ladite partie fixe (14) entourant le bouton poussoir (22).

2. Allume-cigares selon la revendication 1, **caractérisé par le fait que** le guide lumineux (26) présente la forme d'un cylindre de révolution autour de l'axe de translation de la partie mobile (16) par rapport à la partie fixe (14), le diamètre interne du cylindre étant adapté pour guider le bouton poussoir (22) en coulissement.

3. Allume-cigares selon l'une quelconque des revendications précédentes, **caractérisé par le fait que** le corps d'alimentation (4) est monté sur une planche de bord (2) et comporte une bague éclairante (10) visible sur la planche de bord (2), entourant l'orifice d'introduction du bouchon dans le corps d'alimentation (4), pour aider au repérage de l'allume-cigares (1) et transmettre la lumière au bouchon (6), lorsque ce dernier est dans le corps d'alimentation (4).

4. Allume-cigares selon la revendication 3, **caractérisé par le fait que** la lumière est transmise au guide lumineux (26) par la bague éclairante (10).

5. Allume-cigares selon la revendication 4, **caractérisé par le fait que** la bague éclairante (10) et le guide lumineux (26) comportent chacun au moins une zone éclairante teintée d'une couleur différente, pour que l'allume-cigares (1) émette des lumières colorées différentes, lorsque le bouchon (6) est en place dans le réceptacle et lorsqu'il ne l'est pas.

6. Allume-cigares selon l'une quelconque des revendications précédentes, **caractérisé par le fait que** le guide lumineux (26) colore la lumière.

7. Allume-cigares selon l'une quelconque des revendications précédentes, **caractérisé par le fait que** le guide lumineux (26) affleure à la surface de la planche de bord (2).

8. Allume-cigares selon l'une quelconque des revendications précédentes, **caractérisé par le fait que** le guide lumineux (26) affleure, au moins partiellement, sur une surface de préhension (32) du bouchon.

9. Allume-cigares selon la revendication 8, **caractérisé par le fait que** le guide lumineux (26) forme au moins une partie de la surface de préhension (32).

10. Allume-cigares selon l'une quelconque des revendications précédentes, **caractérisé par le fait que** le guide lumineux (26) est constitué d'une matière plastique transmettant la lumière.

11. Allume-cigares selon l'une quelconque des revendications précédentes, **caractérisé par le fait que** la lumière est transmise au guide lumineux (26) par ses flancs grâce à un module d'éclairage (12) auxiliaire extérieur à l'allume-cigares (1).

12. Allume-cigares selon l'une quelconque des revendications précédentes, **caractérisé par le fait que** la source de lumière (12) est constituée par l'un des éléments de la liste comprenant les conduits lumineux, les diodes et les ampoules.

## Patentansprüche

1. Beleuchteter Zigarettenanzünder, insbesondere für Kraftfahrzeuge, mit einer Anschlussbuchse (4), die eine Aufnahme für ein abnehmbares, beleuchtetes aufheizbares Steckteil (6) bildet, wobei das Steckteil (6) ein feststehendes Teil (14) und ein bewegliches Teil (16) umfasst, das innen im feststehenden Teil in Bezug auf dieses axial verschoben werden kann, wobei das bewegliche Teil einen Druckknopf (22) umfasst und das Steckteil (6) ferner eine beleuchtete Führung (26) aufweist, um das Licht abzustrahlen, das auf diese von einer außerhalb des Steckteils gelegenen Lichtquelle (12) übertragen wird, wenn sich das Steckteil in der Anschlussbuchse (4) befindet,
**dadurch gekennzeichnet, dass** die beleuchtete Führung ein den Druckknopf (22) umgebendes Element des feststehenden Teils (14) ist.

2. Zigarettenanzünder nach Anspruch 1,
**dadurch gekennzeichnet, dass** die beleuchtete Führung (26) die Form eines Rotationszylinders um die Translationsachse des beweglichen Teils (16) in Bezug auf das feststehende Teil (14) hat, wobei der Innendurchmesser des Zylinders den Druckknopf (22) beim Gleiten zu führen vermag.

3. Zigarettenanzünder nach einem der vorhergehenden Ansprüche,
**dadurch gekennzeichnet, dass** die Anschlussbuchse (4) auf einem Armaturenbrett (2) angebracht ist und einen auf dem Armaturenbrett (2) sichtbaren, die Einführungsöffnung für das Steckteil in der Anschlussbuchse (4) umgebenden Leuchtring (10) aufweist, um den Zigarettenanzünder (1) besser wahrzunehmen und um das Licht auf das Steckteil (6) zu übertragen, wenn sich dieses in der Anschlussbuchse (4) befindet.

4. Zigarettenanzünder nach Anspruch 3,
**dadurch gekennzeichnet, dass** das Licht durch den Leuchtring (10) auf die beleuchtete Führung (26) übertragen wird.

5. Zigarettenanzünder nach Anspruch 4,
**dadurch gekennzeichnet, dass** der Leuchtring (10) und die beleuchtete Führung (26) jeweils mindestens einen unterschiedlich gefärbten leuchtenden Bereich aufweisen, damit der Zigarettenanzünder (1) unterschiedlich gefärbtes Licht abgibt, je nachdem ob sich das Steckteil (6) in der Aufnahme befindet oder nicht.

6. Zigarettenanzünder nach einem der vorhergehenden Ansprüche,
**dadurch gekennzeichnet, dass** die beleuchtete Führung (26) das Licht färbt.

7. Zigarettenanzünder nach einem der vorhergehenden Ansprüche,
**dadurch gekennzeichnet, dass** die beleuchtete Führung (26) bündig mit der Oberfläche des Armaturenbretts (2) ist.

8. Zigarettenanzünder nach einem der vorhergehenden Ansprüche,
**dadurch gekennzeichnet, dass** die beleuchtete Führung (26) wenigstens teilweise mit einer Greiffläche (32) des Steckteils bündig ist

9. Zigarettenanzünder nach Anspruch 8
**dadurch gekennzeichnet, dass** die beleuchtete Führung (26) wenigstens einen Teil der Greiffläche (32) bildet.

10. Zigarettenanzünder nach einem der vorhergehenden Ansprüche,
**dadurch gekennzeichnet, dass** die beleuchtete Führung (26) aus einem das Licht übertragenden Kunststoff gebildet ist.

11. Zigarettenanzünder nach einem der vorhergehenden Ansprüche,
**dadurch gekennzeichnet, dass** das Licht auf die beleuchtete Führung (26) durch deren Seitenteile mit Hilfe eines zusätzlichen Beleuchtungsmoduls (12) außerhalb des Zigarettenanzünders (1) übertragen wird.

12. Zigarettenanzünder nach einem der vorhergehenden Ansprüche,
**dadurch gekennzeichnet, dass** die Lichtquelle (12) durch ein Element aus der Gruppe umfassend Leuchtröhren, Dioden und Glühlampen gebildet ist.

## Claims

1. Luminous cigar lighter, in particular for motor vehicles, comprising a supply body (4) forming a receptacle for a luminous removable heated plug (6), the said plug (6) comprising a fixed part (14) and a moving part (16) able to be moved axially with respect to the said fixed part and inside the said fixed part, the moving part comprising a push button (22), the plug (6) also comprising a luminous guide (26) for propagating the light which is transmitted to it when the plug is in place in the supply body (4) from a light source (12) external to the plug, **characterised by** the fact that the said luminous guide is an element of the said fixed part (14) surrounding the push button (22).

2. Cigar lighter according to Claim 1, **characterised by** the fact that the luminous guide (26) has the form of a cylinder of revolution about the translation axis of the movable part (16) with respect to the fixed part (14), the internal diameter of the cylinder being adapted to guide the push button (22) slidably.

3. Cigar lighter according to any one of the preceding claims, **characterised by** the fact that the supply body (4) is mounted on a dashboard (2) and comprises an illuminating ring (10) visible on the dashboard (2), surrounding the orifice by which the plug is inserted in the supply body (4), to assist the location of the cigar lighter (1) and to transmit light to the plug (6), when the latter is in the supply body (4).

4. Cigar lighter according to Claim 3, **characterised by** the fact that the light is transmitted to the luminous guide (26) by the illuminating ring (10).

5. Cigar lighter according to Claim 4, **characterised by** the fact that the illuminating ring (10) and the luminous guide (6) each comprise at least one illuminating zone tinted with a different colour, so that the cigar lighter (1) emits different coloured lights when the plug (6) is in place in the receptacle and when it is not.

6. Cigar lighter according to any one of the preceding claims, **characterised by** the fact that the luminous guide (26) colours the light.

7. Cigar lighter according to any one of the preceding claims, **characterised by** the fact that the luminous guide (26) is flush with the surface of the dashboard (2).

8. Cigar lighter according to any one of the preceding claims, **characterised by** the fact that the luminous guide (26) is at least partially flush with a gripping surface (32) of the plug.

9. Cigar lighter according to Claim 8, **characterised by** the fact that the luminous guide (26) forms at least part of the gripping surface (32).

10. Cigar lighter according to any one of the preceding claims, **characterised by** the fact that the luminous guide (26) is formed from a plastics material transmitting light.

11. Cigar lighter according to any one of the preceding claims, **characterised by** the fact that the light is transmitted to the luminous guide (26) by its sides by virtue of an auxiliary lighting module (12) external to the cigar lighter (1).

12. Cigar lighter according to any one of the preceding claims, **characterised by** the fact that the light source (12) consists of one of the elements in the list comprising light pipes, diodes and bulbs.
